(19) Europäisches Patentamt / European Patent Office / Office européen des brevets

(11) **EP 3 480 734 B1**

(12) **EUROPEAN PATENT SPECIFICATION**

(45) Date of publication and mention
of the grant of the patent:
**07.02.2024 Bulletin 2024/06**

(21) Application number: **18160972.8**

(22) Date of filing: **09.03.2018**

(51) International Patent Classification (IPC):
**G06F 18/2411** (2023.01)  **G06F 18/2433** (2023.01)
**G06N 20/10** (2019.01)  **G06F 17/18** (2006.01)

(52) Cooperative Patent Classification (CPC):
**G06N 20/10; G06F 17/18; G06F 18/2411;
G06F 18/2433**

(54) **GENERALIZED ONE-CLASS SUPPORT VECTOR MACHINES WITH JOINTLY OPTIMIZED HYPERPARAMETERS THEREOF**

VERALLGEMEINERTE EINKLASSENUNTERSTÜTZUNGSVEKTORMASCHINEN MIT GEMEINSAM OPTIMIERTEN HYPERPARAMETERN DAVON

MACHINES À VECTEUR DE SUPPORT GÉNÉRALISÉES DE CLASSE UNIQUE UTILISANT DES HYPERPARAMÈTRES OPTIMISÉS CONJOINTEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.08.2017 IN 201721028487**

(43) Date of publication of application:
**08.05.2019 Bulletin 2019/19**

(73) Proprietor: **Tata Consultancy Services Limited
Maharashtra (IN)**

(72) Inventors:
- **UKIL, Arijit**
  **700160 Kolkata, West Bengal (IN)**
- **BANDYOPADHYAY, Soma**
  **700160 Kolkata, West Bengal (IN)**
- **PURI, Chetanya**
  **700160 Kolkata, West Bengal (IN)**
- **SINGH, Rituraj**
  **700160 Kolkata, West Bengal (IN)**
- **PAL, Arpan**
  **700160 Kolkata, West Bengal (IN)**

(74) Representative: **Goddar, Heinz J.
Boehmert & Boehmert
Anwaltspartnerschaft mbB
Pettenkoferstrasse 22
80336 München (DE)**

(56) References cited:
- **Zhuang L et al: "Parameter optimization of kernel-based one-class classifier on imbalance learning", JOURNAL OF COMPUTERS, vol. 1, no. 7 October 2006 (2006-10), pages 32-40, XP055528245, Retrieved from the Internet: URL:http://citeseerx.ist.psu.edu/viewdoc/d ownload?doi=10.1.1.542.7536&rep=rep1&type= pdf [retrieved on 2018-11-28]**
- **CHETANYA PURI ET AL: "Classification of Normal and Abnormal Heart Sound Recordings through Robust Feature Selection", 2016 COMPUTING IN CARDIOLOGY CONFERENCE (CINC), 11-14 SEPTEMBER 2016, vol. 43, 11 September 2016 (2016-09-11), pages 1-4, XP055540949, ISSN: 2325-887X, DOI: 10.22489/CinC.2016.322-363 ISBN: 978-1-5090-0895-7**

EP 3 480 734 B1

**Description**

Priority Claim

The present application claims priority from: Indian Patent Application No. 201721028487, filed on 10th August, 2017.

Technical Field

The embodiments herein generally relate to binary classification, and more particularly to systems and methods for constructing generalized one-class support vector machines with jointly optimized hyperparameters thereof.

**Background**

It is seen that in many real-life applications, only single labeled training class is available to learn and classify, whereas testing phase may involve unknown number of classes. This is a typical problem faced when performing smart analytics, where positive examples (non-anomalous samples) are provided during learning and at the testing phase, negative or anomalous samples are required to be separated out.

With wide-spread adoption of Internet of Things (IoT), data explosion has rendered active domain expert involvement a massively costly affair. Labeling and annotation of training datasets by domain experts in many applications are not feasible in many scenarios. For example, in medical applications, anomaly detection is seemingly the most vital analytics decision. Yet, computational methodology cannot be completely dependent on labeling efforts made by the experts. Many bio-medical applications require sensor signal analysis. For example, Electrocardiogram (ECG) and phonocardiogram (PCG) are required to identify cardio-vascular abnormality. However, in most cases clinically normal training of PCG, ECG signals are much higher than clinically abnormal PCG, ECG signals. Such imbalance problem renders the classification task difficult. Thus, clinical decision making in data-driven computational methods is a challenging task due to scarcity of negative examples. Zhuang L et al: "Parameter optimization of kernel-based: one-class classifier on imbalance learning", JOURNAL OF COMPUTERS,vol. 1, no. 7 October 2006 discloses the joint optimization of parameters of a least-squares SVM (LS-SVM) .

SUMMARY

Embodiments of the present disclosure present technological improvements as solutions to one or more of the above-mentioned technical problems recognized by the inventors in conventional systems.

In an aspect, there is provided a processor implemented method according to claim 1.

In another aspect, there is provided a system according to claim 2.

In yet another aspect, there is provided a computer program product according to claim 3.

It is to be understood that both the foregoing general description and the following detailed description are exemplary and explanatory only and are not restrictive of the embodiments of the present disclosure, as claimed.

BRIEF DESCRIPTION OF THE DRAWINGS

The embodiments herein will be better understood from the following detailed description with reference to the drawings, in which:

FIG.1 illustrates an exemplary block diagram of a system for constructing generalized one-class support vector machines with jointly optimized hyperparameters thereof, in accordance with an embodiment of the present disclosure;

FIG.2 illustrates an exemplary high-level flow chart illustrating a method for constructing generalized one-class support vector machines with jointly optimized hyperparameters thereof, in accordance with an embodiment of the present disclosure;

FIG.3 is an exemplary flow diagram illustrating a computer implemented method for constructing generalized one-class support vector machines with jointly optimized hyperparameters thereof, in accordance with an embodiment of the present disclosure; and

FIG.4 illustrates a graphical illustration for anomaly detection performance comparison between hyperparameters derived in accordance with an embodiment of the present disclosure and hyperparameters derived by methods known in the art.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

DETAILED DESCRIPTION

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the spirit and scope of the disclosed embodiments. It is intended that the following detailed description be considered as exemplary only, with the true scope being indicated by the appended claims.

Before setting forth the detailed explanation, it is noted that all of the discussion below, regardless of the particular implementation being described, is exemplary in nature, rather than limiting.

Traditional classification problem discriminates binary classes. In reality, there exist problems where the discrimination is between one class from any other class(es), particularly, when only a positive example set is available for reliable training. De-corruption of physiological signals like phonocardiogram (PCG) is one of such application cases. For ensuring clinical inference from such signals without human intervention, appropriate de-corruption is of utmost importance. It may be noted that corrupted PCG signals have very less information for appropriate clinical analytics. In fact, contaminated signals may render high mi-classification which is undesirable for clinical inference purposes. Noise or corruption as part of signal space as well as class noise leads to poor classification outcome independent of the power of machine learning techniques employed.

In order to identify noisy PCG signals, learner models have to be adequately trained by both clean and noisy examples. However, training sets mainly contain clean signals only and it is impractical to train with corrupted signals as corrupted signal universe can rarely be captured through a smaller set of negative examples. In such a scenario, optimal decision boundary construction plays a major role in reducing misclassification errors. Accordingly, systems and methods of the present disclosure kernel-optimize one-class support vector machine (OC-SVM) by finding optimal kernel co-efficient $\gamma_{opt}$ and rejection rate hyperparameter $v_{opt}$.

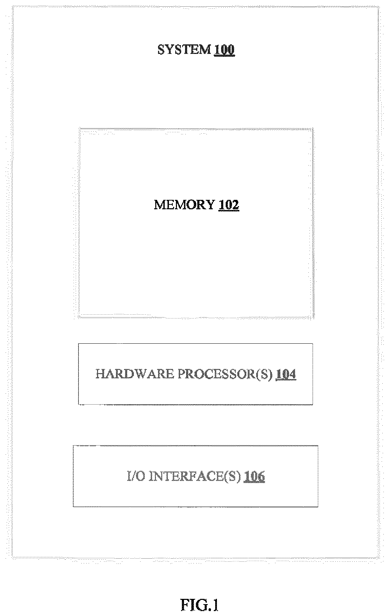

Referring now to the drawings, and more particularly to FIGS. 1 through 4, where similar reference characters denote corresponding features consistently throughout the figures, there are shown preferred embodiments and these embodiments are described in the context of the following exemplary system and method.

FIG. 1 illustrates an exemplary block diagram of a system 100 for constructing generalized one-class support vector machines with jointly optimized hyperparameters thereof, in accordance with an embodiment of the present disclosure. In an embodiment, the system 100 includes one or more processors 104, communication interface device(s) or input/output (I/O) interface(s) 106, and one or more data storage devices or memory 102 operatively coupled to the one or more processors 104. The one or more processors 104 that are hardware processors can be implemented as one or more microprocessors, microcomputers, microcontrollers, digital signal processors, central processing units, state machines, graphics controllers, logic circuitries, and/or any devices that manipulate signals based on operational instructions. Among other capabilities, the processor(s) are configured to fetch and execute computer-readable instructions stored in the memory. In an embodiment, the system 100 can be implemented in a variety of computing systems, such as laptop computers, notebooks, hand-held devices, workstations, mainframe computers, servers, a network cloud and the like.

The I/O interface device(s) 106 can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, one or more modules (not shown) of the system 100 can be stored in the memory 102.

In an embodiment, the system 100 comprises one or more data storage devices or memory 102 operatively coupled to the one or more processors 104 and is configured to store instructions configured for execution of steps of the method 200 by the one or more processors 104.

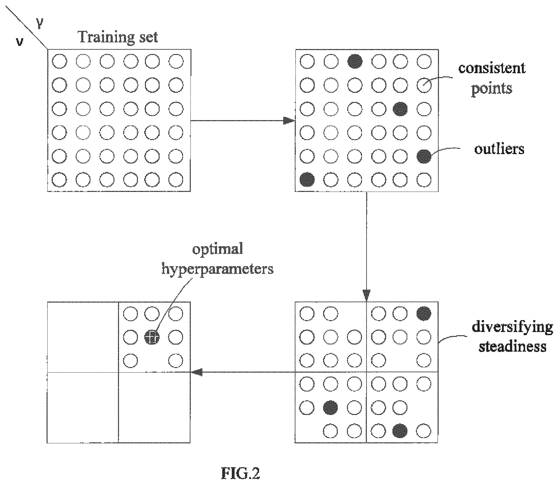

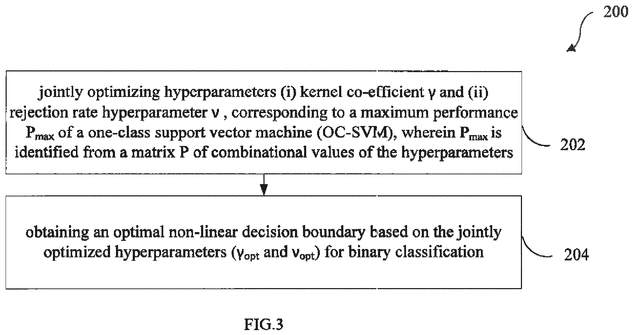

FIG.2 illustrates an exemplary high-level flow chart and FIG.3 is an exemplary flow diagram illustrating a computer implemented method for constructing generalized one-class support vector machines with jointly optimized hyperparameters thereof, in accordance with an embodiment of the present disclosure. The steps of the method 200 will now be explained in detail with reference to the components of the system 100 of FIG. 1 and the high-level flow chart of FIG.2.

Variance of Radial Basis Function (RBF) is determined by the kernel co-efficient $\gamma$. For larger $\gamma$, narrower would be the kernel and the corresponding hypersurface is spiky, which means it is zero almost everywhere except at the support vectors, while low value of $\gamma$ corresponds to larger RBF bandwidth and the hypersurface is very flat. The rejection rate hyperparameter $v$ represents a lower bound on the support vector and higher bound on number of outliers. Accordingly, OC-SVM has high sensitivity with both $\gamma$ and $v$. Isolated attempts of optimizing performances of the two hyperparameters in the past have resulted in sub-optimal performance of the OC-SVM. The methods and systems of the present invention facilitate joint optimization of the two hyperparameters for robust detection of anomalous events to solve the class imbalance problem. It ensures that the decision boundary of the OC-SVM is not biased for positive examples or known classes, thereby enabling construction of a generic application independent classifier.

The present invention aims to find optimal hyperparameters of OC- SVM such that a smooth non-linear decision boundary can be formed. The OC-SVM is very sensitive to the hyperparameters and thus hyperparameters impact the decision making process of the classifier. Let, $\omega$ be the vector perpendicular to the decision boundary of the OC-SVM and $\rho$ be a bias that parameterizes a hypersurface in the feature space $\mathcal{F}$ and $k$ be the associated kernel function and $\mathcal{H}$ be a reproducing kernel Hilbert space. It is assumed that $k(x, \cdot)$ be bounded for $x \in X$, where $X = \{x_i\}$ $i = 1, 2, \ldots n$, $x_i \in \mathbb{R}^d$, $X$ be the input training vector space. The constraint objective function of OC-SVM as known is:

$$\min_{\omega, \rho, \xi} \left( \frac{\|\omega\|^2}{2} + \frac{1}{vn} \sum_{i=1}^{n} \xi_i - \rho \right), \ i = 1, 2, \ldots, n \qquad (1)$$

subject to:

$$\omega^T \phi(x_i) \geq \rho - \xi_i, \qquad \xi_i \geq 0 \qquad (2)$$

where a non-linear function $\phi \colon X \to \mathcal{F}$ maps vector $X$ from input vector space $X$ to feature space $\mathcal{F}$ and $\xi_i$ is the $i^{th}$ positive slack variable that penalizes the objective function, but allows few of the points to lie on the other side of the decision boundary $f(x)$. $\phi(x_i) = [f_1(x_i), f_2(x_i), \ldots,]^T$ containing the features $f_i(x_i)$ from and rejection rate hyperparameter $v \in (0,1)$. $v$ is a trade-off parameter that has a significant role in anomaly detection. It is to be noted that without an optimal choice of $v$, number of anomaly detection may suffer; $v$ is an upper bound on the fraction of training vectors external to the constructed decision boundary. The decision of anomaly detection by the decision function f may be sub-optimal and misclassification rate may be high, when $\frac{v_{optimal}}{v} \nrightarrow 1$. It means that when $v$ is not close to what is supposed to be the optimal $v$ ($v_{optimal}$), then either high false positive error or high false negative error are reported. If, $\frac{v_{optimal}}{v} \gg 1$, some sure anomalies are rejected and when $\frac{v_{optimal}}{v} \ll 1$, some normal /non-anomalous samples are detected as anomalies.

Let, a be the Lagrangian multipliers. The solution of equation 1, 2 is equivalent to Lagrange duality form and its Wolfe dual representation form:

$$minimize \left\{ \frac{1}{2} \sum_{i,j} \alpha_i \alpha_j \langle \phi(x_i), \phi(x_j) \rangle \right\} \qquad (3)$$

subject to:

$$0 \leq \alpha_i \leq \frac{1}{vn}, \quad \sum_{i=1}^{n} \alpha_i = 1$$

From equation (3), the decision function may be represented as:

$$f(x) = sgn(\sum_{i=1}^{n} \alpha_i \langle \phi(x_i), \phi(x) \rangle - \rho) \qquad (4)$$

Using "kernel trick" of kernel k that satisfies Mercer's conditions:

$$k(x_i, x_j) = \langle \phi(x_i), \phi(x_j) \rangle \qquad (5)$$

wherein k is a dot product to fit into the transformed feature space for providing maximum-margin hyperplane.

In the present disclosure, Radial Basis Function (RBF) kernel has been chosen, where the samples are linearly dependent in the feature space $\mathcal{F}$, $k(x_i, x_j) = e^{(-\gamma \|x_i - x_j\|^2)}, \gamma > 0$, $\gamma$ denotes the kernel bandwidth. For larger $\gamma$, the narrower would be the kernel and the corresponding hypersurface is spiky, which means it is zero in almost everywhere except at the support vectors, while low value of $\gamma$ corresponds to larger RBF bandwidth and the hypersurface is very flat. It is conclude that in order to achieve optimal OC-SVM decision boundary, dual optimization of $\gamma$ and v is required. Subsequently, it is demonstrated that optimal or near-optimal hyperparameters ($\gamma_{opt}$, $v_{opt}$) would sufficiently induce less misclassification error.

Let $X = \{X_{train}, X_{learn}\}$ be divided into disjoint sets $X_{train}$, $X_{learn}$ for training and model learning respectively, where

$$X_{train} = X_{train}^{positive-class-1}, X_{learn}$$
$$= \{X_{learn}^{positive-class-2}, X_{learn}^{negative-class}\}, X_{train}^{positive-class}$$
$$= \{X_{train}^{positive-class-1}, X_{train}^{positive-class-2}\}.$$

The present invention provides joint optimization of the hyperparameters $\gamma$, v to find $k_{opt}$ that is steady with non-spurious maximum consistent performance over the learning set $X_{learn}$.

The range of v = (0,1) and typically the range of y: ($\gamma_{low} = 2^{-4}$, $\gamma_{high} = 2^5$). Let, $\Delta_v$ and $\Delta_\gamma$ be the quantization level of v, $\gamma$ respectively, $\theta_v = \frac{1}{\Delta_v}$, $\theta_\gamma = \frac{(\gamma_{high} - \gamma_{low})}{\Delta_\gamma}$ be the number of total instances of v, $\gamma$ respectively and $\rho$ be the performance parameter which may be F1-score, accuracy, sensitivity, specificity, geometric mean of sensitivity and specificity, the more common F1-score being considered in the present disclosure. $\mathbb{P} = \{\rho_{ij}\}_{i,j=1}^{i=\theta_v, j=\theta_\gamma}$ be the complete spectra of performance of the method of the present invention for each of v, $\gamma$ in $\theta_v$, $\theta_\gamma$ when the trained model is validated by $X_{learn}$. Thus, a matrix $\mathbb{P}$ of dimension $\theta_v \times \theta_\gamma$ is formed, where each element corresponds to the performance of OC-SVM on $X_{learn}$ in terms of $\rho$. The objective of the present invention is to find the v, $\gamma$ corresponding to

$\mathbb{P}_{max} = \max_{i \in v, j \in \gamma}(\rho_{ij})$ such that $\mathbb{P}_{max}$ is not inconsistent with its vicinity. In accordance with the present invention, the divide-conquer algorithm to find the $\mathbb{P}_{max}$ and corresponding $k_{opt} = \{\gamma_{optimal}, v_{optimal}\}$ is explained hereinafter.

In accordance with an embodiment of the present invention, the one or more processors 104 are configured to jointly optimize, at step 202, hyperparameters (i) kernel co-efficient $\gamma$ and (ii) rejection rate hyperparameter v, corresponding to a maximum performance $\mathbb{P}_{max}$ a one-class support vector machine (OC-SVM), wherein $\mathbb{P}_{max}$ is identified from a matrix P of combinational values of the hyperparameters.

Input: $\mathbb{P} = \{\rho_{ij}\}_{i,j=1}^{i=\theta_v, j=\theta_\gamma}$, where $\mathbb{P}$ consists of all the possible combination of $\gamma$, v within the range with the dimension $\theta_v \times \theta_\gamma$

In an embodiment, the step 202 of jointly optimizing the hyperparameters firstly comprises eliminating outliers in the matrix P to obtain a steadiness matrix $\mathbb{P}_{steady}$ (step 202a). As represented in the high-level flow chart of FIG.2, outliers or inconsistent points (represented by bold dots) are eliminated from the training set of consistent points (represented by empty circles) training set. In an embodiment, a Density-Based Algorithm for Discovering Clusters in Large Spatial Databases with Noise (DBSCAN) may be employed. In DBSCAN algorithm, two parameters $\varpi$, $n$ are to be tuned, where $\varpi$, $n$ are the distance and density parameters respectively, where $\varpi$ is defined the furthest distance for which a point is density-reachable and $n$ is the minimum number of points required to form a density cluster.

In the present disclosure, $n$ is chosen as: $n = min((max(\theta_v, \theta_j))^{1/3}$, $\zeta$:s.t. $\zeta$! *is nearest to* $max(\theta_v, \theta_j))$. The consideration of $n$ stems from the fact that $n$ should vary in inverse polynomial for smaller number of elements in the cluster and in negative exponential for larger number of elements in the density cluster.

In accordance with the present disclosure, $\varpi = \lceil 3\sigma \rceil$ $\sigma$= standard deviation ($\mathbb{P}$), which is determined intuitively considering the quasi-homogeneity in the P pattern.

Then a steadiness parameter $\delta_{steady}$ is computed based on maximum performance and standard deviation associated with the steadiness matrix $\mathbb{P}_{steady}$ (step 202b). Accordingly,

$$\delta = \delta_{steady} = \left( \frac{\max_{i,j} \mathbb{P}_{steady}}{standard\ deviation(\mathbb{P}_{steady})} \right),$$

$\delta$ ensures that the maximum performance parameter reported in the $\mathbb{P}_{steady}$ is simultaneously not too deviated from the mean performance of $\mathbb{P}_{steady}$ .

Once the steadiness parameter $\delta_{steady}$ is determined, it is diversified by forming a plurality of matrices $\mathbb{P}_{new}$ representing a plurality of regions comprising the steadiness matrix $\mathbb{P}_{steady}$ for analyzing new steadiness parameter

$$\delta_{new}^{steady}$$

corresponding to each of the plurality of matrices $\mathbb{P}_{new}$ (step 202c). For instance, four $\mathbb{P}_{new}$ matrices may be formed from the steadiness matrix $\mathbb{P}_{steady}$ as represented in the high-level flow chart of FIG.2.

In accordance with the present invention, for each of the four $\mathbb{P}_{new}$ matrices, new steadiness parameter

$$\delta_{new}^{steady}$$

is iteratively computed as explained above until a stopping criterion is satisfied, wherein the stopping criterion is a ratio of the steadiness parameter $\delta_{steady}$ and the new steadiness parameter

$$\delta_{new}^{steady}$$

less than or equal to $\varepsilon$, wherein $\varepsilon$ represents a deviation coefficient tending to 1 (step 202d).

In accordance with an embodiment of the present invention, a new steadiness matrix $\mathbb{P}_{new}^{steady}$ corresponding to the new steadiness parameter

$$\delta_{new}^{steady}$$

that meets the stopping criterion is selected (step 202e). A pair $\mathcal{k}_{opt}$ of optimal hyperparameters kernel co-efficient $\gamma_{opt}$ and optimal rejection rate hyperparameter $v_{opt}$ corresponding to a maximum performance element of the selected new steadiness matrix $\mathbb{P}^{steady}_{new}$ is then determined (step 202f). Incremental optimization may be performed to derive $\mathcal{k}_{opt}$ = {$\gamma_{optimal}$, $v_{optimal}$}. F1- score may be considered as the performance of merit for the optimization. The objective of discovering $\mathcal{k}_{opt}$ for a given unbalanced training set is to find that {$\gamma$, $v$} which is in that center of white region of a heat-map visualization, where in both X-Y direction, boundary of the white region is maximum, which is probable through joint optimization of $\gamma$, $v$ The method of the present disclosure for finding $\mathcal{k}_{opt}$ = {$\gamma_{optimal}$, $v_{optimal}$} nearly converges to the center of the white region (equivalent to consistently maximum performance).

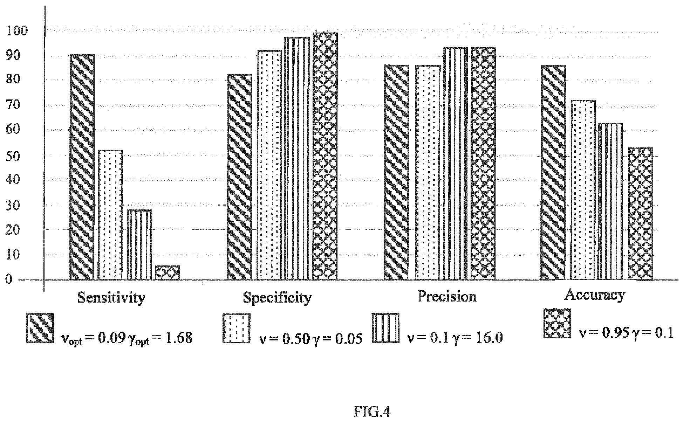

FIG.4 illustrates a graphical illustration for anomaly detection performance comparison between hyperparameters derived in accordance with an embodiment of the present disclosure and hyperparameters derived by methods known in the art. For the purpose of experimentation PCG (Phonocardiogram) signals from MIT Physionet Challenge 2016 database were chosen. It may be noted from FIG.4 that $\mathcal{k}_{opt}$ = {$\gamma_{optimal}$, $v_{optimal}$} derived in accordance with the present disclosure outclasses anomaly detection performance over the other methods known in the art.

Thus in accordance with the present disclosure, the joint optimization of hyperparameters of one-class classifiers can augment clinical utility of automated cardiac condition screening. In the absence of negative examples, one class classification is an effective method to tackle class imbalance and improve clinical decision making outcomes. However, the optimality of parameters of the one-class learner kernel plays a deterministic role on the performance of the learner model of the OC-SVM. Hyperparameters, viz., kernel co-efficient $\gamma$ and rejection rate hyperparameter $v$ are responsible for the OC-SVM to form a non-linear boundary with training vectors (positive examples). Optimizing the hyperparameters such that steadiness is achieved ensures that one-off incident of excellent performance that can result in over-fitting can be ignored, thereby making the OC-SVM decision boundary smooth and unperturbed by outlier training examples. Since the methods of the present disclosure are independent of the class of the class of training set, the present disclosure facilitates constructing generalized one-class support vector machines.

The written description describes the subject matter herein to enable any person skilled in the art to make and use the embodiments of the present disclosure. The scope of the subject matter defined here may include other modifications that occur to those skilled in the art. Such other modifications are intended to be within the scope if they have similar elements that do not differ from the literal language of the claims or if they include equivalent elements with insubstantial differences from the literal language.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments of the present disclosure may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules comprising the system of the present disclosure and described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device. The various modules described herein may be implemented as software and/or hardware modules and may be stored in any type of non-transitory computer readable medium or other storage device. Some nonlimiting examples of non-transitory computer-readable media include CDs, DVDs, BLU-RAY, flash memory, and hard disk drives.

Further, although process steps, method steps, techniques or the like may be described in a sequential order, such processes, methods and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

It is intended that the disclosure and examples be considered as exemplary only, with a true scope of disclosed embodiments being indicated by the appended claims.

## Claims

1. A processor implemented method (200) for identifying cardio-vascular abnormality in Electrocardiogram (ECG) and phonocardiogram (PCG) by constructing a generalized one-class support vector machine with jointly optimized hyperparameters thereof, the method (200) comprising:

   constructing a generalized one-class support vector machines (OC-SVM) by jointly optimizing hyperparameters (i) kernel co-efficient $\gamma$ and (ii) rejection rate hyperparameter v, corresponding to a maximum performance $\mathbb{P}_{max}$ of the OC-SVM, wherein $\mathbb{P}_{max}$ is identified from a matrix $\mathbb{P}$ which consists of all the possible combinational values of hyperparameters $\gamma$ and v (202) and where each element corresponds to the performance of OC-SVM, wherein the step of jointly optimizing the hyperparameters comprises:

   (i) eliminating outliers in the matrix $\mathbb{P}$ to obtain a steadiness matrix $\mathbb{P}_{steady}$ (202a) using a Density-Based Algorithm for Discovering Clusters in Large Spatial Databases with Noise (DBSCAN);

   (ii) computing a steadiness parameter $\mathcal{S}_{steady}$ by dividing a maximum performance of the steadiness matrix $\mathbb{P}_{steady}$ with a standard deviation associated with the steadiness matrix $\mathbb{P}_{steady}$ (202b);

   (iii) diversifying the steadiness parameter $\mathcal{S}_{steady}$ by forming a plurality of matrices $\mathbb{P}_{new}$ representing a plurality of regions comprising the steadiness matrix $\mathbb{P}_{steady}$ for analyzing new steadiness parameter

$$\mathcal{S}_{new}^{steady}$$

   corresponding to each of the plurality of matrices $\mathbb{P}_{new}$ (202c);

   (iv) iteratively computing new steadiness parameter

$$\mathcal{S}_{new}^{steady}$$

   based on step (ii) until a stopping criterion is satisfied, wherein the stopping criterion is a ratio of the steadiness parameter $\mathcal{S}_{steady}$ and the new steadiness parameter

$$\mathcal{S}_{new}^{steady}$$

less than or equal to $\varepsilon$, wherein $\varepsilon$ represents a deviation coefficient tending to 1 (202d);

(v) selecting a new steadiness matrix $\mathbb{P}^{steady}_{new}$ corresponding to the new steadiness parameter

$$\mathcal{S}^{steady}_{new}$$

that meets the stopping criterion (202e); and

(vi) determining a pair $\mathcal{K}_{opt}$ of optimal kernel co-efficient $\gamma_{opt}$ and optimal rejection rate hyperparameter $v_{opt}$ corresponding to a maximum performance element of selected new steadiness matrix $\mathbb{P}^{steady}_{new}$ (202f) using a divide-conquer algorithm;

obtaining an optimal non-linear decision boundary for the OC-SVM based on the jointly optimized hyperparameters ($\gamma_{opt}$ and $v_{opt}$) for maximizing performance of binary classification (204), wherein the jointly optimized hyperparameters enable a learner model of the OC-SVM to form a smooth non-linear decision boundary unperturbed by outliers; and
identifying cardio-vascular abnormality in Electrocardiogram and phonocardiogram signals.

2. A system (100) for identifying cardio-vascular abnormality in Electrocardiogram (ECG) and phonocardiogram (PCG) by constructing a generalized one-class support vector machine with jointly optimized hyperparameters thereof, the system (100) comprising: one or more data storage devices (102) operatively coupled to one or more hardware processors (104) and configured to store instructions configured for execution by the one or more hardware processors to:

construct a generalized one-class support vector machines (OC-SVM) by jointly optimizing hyperparameters (i) kernel co-efficient $\gamma$ and (ii) rejection rate hyperparameter v, corresponding to a maximum performance $\mathbb{P}_{max}$ of the OC-SVM, wherein $\mathbb{P}_{max}$ is identified from a matrix $\mathbb{P}$ which consists of all the possible combinational values of hyperparameters $\gamma$ and v and where each element corresponds to the performance of OC-SVM, wherein the one or more hardware processors are further configured to jointly optimize the hyperparameters by:

(i) eliminating outliers in the matrix $\mathbb{P}$ to obtain a steadiness matrix $\mathbb{P}_{steady}$, using a Density-Based Algorithm for Discovering Clusters in Large Spatial Databases with Noise (DBSCAN);

(ii) computing a steadiness parameter $\mathcal{S}_{steady}$ by dividing a maximum performance of the steadiness matrix $\mathbb{P}_{steady}$ with a standard deviation associated with the steadiness matrix $\mathbb{P}_{steady}$;

(iii) diversifying the steadiness parameter $\mathcal{S}_{steady}$ by forming a plurality of matrices $\mathbb{P}_{new}$ representing a plurality of regions comprising the steadiness matrix $\mathbb{P}_{steady}$ for analyzing new steadiness parameter

$$\mathcal{S}^{steady}_{new}$$

corresponding to each of the four matrices $\mathbb{P}_{new}$;
(iv) iteratively computing new steadiness parameter

$$\mathcal{S}^{steady}_{new}$$

based on step (ii) until a stopping criterion is satisfied, wherein the stopping criterion is a ratio of the steadiness parameter $\mathcal{S}_{steady}$ and the new steadiness parameter

$$\mathcal{S}_{new}^{steady}$$

less than or equal to $\varepsilon$, wherein $\varepsilon$ represents a deviation coefficient tending to 1;

(v) selecting a new steadiness matrix $\mathbb{P}_{new}^{steady}$ corresponding to the new steadiness parameter

$$\mathcal{S}_{new}^{steady}$$

that meets the stopping criterion; and

(vi) determining a pair $\hbar_{\text{opt}}$ of optimal kernel co-efficient $\gamma_{\text{opt}}$ and optimal rejection rate hyperparameter

$v_{\text{opt}}$ corresponding to a maximum performance element of selected new steadiness matrix $\mathbb{P}_{new}^{steady}$ using a divide-conquer algorithm;

obtain an optimal non-linear decision boundary for the OC-SVM based on the jointly optimized hyperparameters ($\gamma_{\text{opt}}$ and $v_{\text{opt}}$) for maximizing performance of binary classification, wherein the jointly optimized hyperparameters enable the OC-SVM to form a smooth non-linear decision boundary unperturbed by outliers; and
identify cardio-vascular abnormality in Electrocardiogram and phonocardiogram signals.

**3.** A computer program product for identifying cardio-vascular abnormality in Electrocardiogram (ECG) and phonocardiogram (PCG) by constructing a generalized one-class support vector machine with jointly optimized hyperparameters thereof, comprising a non-transitory computer readable medium having a computer readable program embodied therein, wherein the computer readable program, when executed on a computing device, causes the computing device to:

construct a generalized one-class support vector machines (OC-SVM) by jointly optimizing hyperparameters (i) kernel co-efficient $\gamma$ and (ii) rejection rate hyperparameter v, corresponding to a maximum performance $\mathbb{P}_{max}$ of the OC-SVM, wherein $\mathbb{P}_{max}$ is identified from a matrix $\mathbb{P}$ which consists of all the possible combinational values of hyperparameters $\gamma$ and v and where each element corresponds to the performance of OC-SVM, wherein the step of jointly optimizing the hyperparameters comprises:

(i) eliminating outliers in the matrix $\mathbb{P}$ to obtain a steadiness matrix $\mathbb{P}_{steady}$, using a Density-Based Algorithm for Discovering Clusters in Large Spatial Databases with Noise (DB SCAN);

(ii) computing a steadiness parameter $\mathcal{S}_{steady}$ by dividing a maximum performance of the steadiness matrix $\mathbb{P}_{steady}$ with a standard deviation associated with the steadiness matrix $\mathbb{P}_{steady}$;

(iii) diversifying the steadiness parameter $\mathcal{S}_{steady}$ by forming a plurality of matrices $\mathbb{P}_{new}$ representing a plurality of regions comprising the steadiness matrix $\mathbb{P}_{steady}$ for analyzing new steadiness parameter

$$\mathcal{S}_{new}^{steady}$$

corresponding to each of the plurality of matrices $\mathbb{P}_{new}$ ,
(iv) iteratively computing new steadiness parameter

$$\mathcal{S}_{new}^{steady}$$

based on step (ii) until a stopping criterion is satisfied, wherein the stopping criterion is a ratio of the steadiness parameter $\mathcal{S}_{steady}$ and the new steadiness parameter

$$\mathscr{S}_{new}^{steady}$$

less than or equal to $\varepsilon$, wherein $\varepsilon$ represents a deviation coefficient tending to 1;

(v) selecting a new steadiness matrix $\mathbb{P}_{new}^{steady}$ corresponding to the new steadiness parameter

$$\mathscr{S}_{new}^{steady}$$

that meets the stopping criterion; and

(vi) determining a pair $\mathscr{k}_{opt}$ of optimal kernel co-efficient $\gamma_{opt}$ and optimal rejection rate hyperparameter

$v_{opt}$ corresponding to a maximum performance element of selected new steadiness matrix $\mathbb{P}_{new}^{steady}$ using a divide-conquer alogorithm;
and

obtain an optimal non-linear decision boundary for the OC-SVM based on the jointly optimized hyperparameters ($\gamma_{opt}$ and $v_{opt}$) for maximizing performance of binary classification, wherein the jointly optimized hyperparameters enable the OC-SVM to form a smooth non-linear decision boundary unperturbed by outliers; and identifying cardio-vascular abnormality in Electrocardiogram and phonocardiogram signals.

**Patentansprüche**

1. Prozessorimplementiertes Verfahren (200) zum Identifizieren von kardiovaskulären Anomalien in Elektrokardiogramm (EKG) und Phonokardiogramm (PCG) durch Konstruieren einer verallgemeinerten Einklassen-Support-Vektor-Maschine mit gemeinsam optimierten Hyperparametern davon, wobei das Verfahren (200) umfasst: Konstruieren einer verallgemeinerten Einklassen-Support-Vektor-Maschine (OC-SVM) durch gemeinsames Optimieren von Hyperparametern (i) kernel-koeffizient $\gamma$ und (ii) Abstoßungsraten-Hyperparameter v, die einer maximalen

   Leistung $\mathbb{P}_{max}$ der OC-SVM entsprechen, wobei $\mathbb{P}_{max}$ aus einer Matrix $\mathbb{P}$ identifiziert wird, die aus allen möglichen Kombinationswerten von Hyperparametern $\gamma$ und v (202) besteht, und wobei jedes Element der Leistung von OC-SVM entspricht, wobei der Schritt des gemeinsamen Optimierens der Hyperparameter umfasst:

   (i) Eliminieren von Ausreißern in der Matrix P, um eine Stabilitätsmatrix $\mathbb{P}_{steady}$ (202a) unter Verwendung eines dichtebasierten Algorithmus zum Entdecken von Clustern in großen räumlichen Datenbanken mit Rauschen (DBSCAN) zu erhalten;

   (ii) Berechnen eines Stabilitätsparameters $\mathscr{S}_{steady}$ durch Teilen einer maximalen Leistung der Stabilitätsmatrix

   $\mathbb{P}_{steady}$ mit einer Standardabweichung, die der Stabilitätsmatrix $\mathbb{P}_{steady}$ (202b) zugeordnet ist;

   (iii) Diversifizieren des Stabilitätsparameters $\mathscr{S}_{steady}$ durch Bilden einer Mehrzahl von Matrizen $\mathbb{P}_{new}$, die

   eine Mehrzahl von Regionen darstellen, die die Stabilitätsmatrix $\mathbb{P}_{steady}$ zum Analysieren eines neuen Stabilitätsparameters

   $$\mathscr{S}_{new}^{steady}$$

   umfassen, der jeder der Mehrzahl von Matrizen $\mathbb{P}_{new}$ (202c) entspricht;
   (iv) iteratives Berechnen eines neuen Stabilitätsparameters

$$\mathcal{S}_{new}^{steady}$$

basierend auf Schritt (ii), bis ein Stoppkriterium erfüllt ist, wobei das Stoppkriterium ein Verhältnis des Stabilitätsparameters $\mathcal{S}_{steady}$ und des neuen Stabilitätsparameters

$$\mathcal{S}_{new}^{steady}$$

ist, das kleiner oder gleich $\varepsilon$ ist, wobei $\varepsilon$ einen Abweichungskoeffizienten darstellt, der zu 1 tendiert (202d);

(v) Auswählen einer neuen Stabilitätsmatrix $\mathbb{P}_{new}^{steady}$, die dem neuen Stabilitätsparameter

$$\mathcal{S}_{new}^{steady}$$

entspricht, der das Stoppkriterium erfüllt (202e); und

(vi) Bestimmen eines Paars $\mathcal{k}_{opt}$ von optimalem kernel-koeffizient $\gamma_{opt}$ und optimalem Abstoßungsraten-Hyperparameter $v_{opt}$, das einem maximalen Leistungselement der ausgewählten neuen Stabilitätsmatrix $\mathbb{P}_{new}^{steady}$ (202f) entspricht, unter Verwendung eines Divide-Conquer-Algorithmus;

Erhalten einer optimalen nichtlinearen Entscheidungsgrenze für das OC-SVM basierend auf den gemeinsam optimierten Hyperparametern ($\gamma_{opt}$ und $v_{opt}$) zum Maximieren der Leistung der binären Klassifizierung (204), wobei die gemeinsam optimierten Hyperparameter es einem Lernmodell des OC-SVM ermöglichen, eine glatte nichtlineare Entscheidungsgrenze zu bilden, die nicht durch Ausreißer gestört ist; und Identifizieren von kardiovaskulären Anomalien in Elektrokardiogramm- und Phonokardiogrammsignalen.

2.  System (100) zum Identifizieren von kardiovaskulären Anomalien in Elektrokardiogramm (EKG) und Phonokardiogramm (PCG) durch Konstruieren einer verallgemeinerten Einklassen-Support-Vektor-Maschine mit gemeinsam optimierten Hyperparametern davon, wobei das System (100) umfasst:

eine oder mehrere Datenspeichervorrichtungen (102), die mit einem oder mehreren Hardwareprozessoren (104) wirkverbunden sind und konfiguriert sind, um Anweisungen zu speichern, die zur Ausführung durch den einen oder die mehreren Hardwareprozessoren konfiguriert sind, um: eine verallgemeinerte Einklassen-Support-Vektor-Maschine (OC-SVM) durch gemeinsames Optimieren von Hyperparametern (i) kernel-koeffizient $\gamma$

und (ii) Abstoßungsraten-Hyperparameter v, die einer maximalen Leistung $\mathbb{P}_{max}$ der OC-SVM entsprechen, wobei $\mathbb{P}_{max}$ aus einer Matrix $\mathbb{P}$ identifiziert wird, die aus allen möglichen Kombinationswerten von Hyperparametern $\gamma$ und v besteht, und wobei jedes Element der Leistung von OC-SVM entspricht, wobei der eine oder die mehreren Hardwareprozessoren ferner konfiguriert sind, um die Hyperparameter gemeinsam zu optimieren durch:

(i) Eliminieren von Ausreißern in der Matrix $\mathbb{P}$, um eine Stabilitätsmatrix $\mathbb{P}_{steady}$ unter Verwendung eines dichtebasierten Algorithmus zum Entdecken von Clustern in großen räumlichen Datenbanken mit Rauschen (DBSCAN) zu erhalten;
(ii) Berechnen eines Stabilitätsparameters $s_{steady}$ durch Teilen einer maximalen Leistung der Stabilitätsmatrix $\mathbb{P}_{steady}$ mit einer Standardabweichung, die der Stabilitätsmatrix $\mathbb{P}_{steady}$ zugeordnet ist,

(iii) Diversifizieren des Stabilitätsparameters $s_{steady}$ durch Bilden einer Mehrzahl von Matrizen $\mathbb{P}_{new}$, die eine Mehrzahl von Regionen darstellen, die die Stabilitätsmatrix $\mathbb{P}_{steady}$ zum Analysieren eines neuen Stabilitätsparameters

$$\mathcal{S}_{new}^{steady}$$

umfassen, der jeder der vier Matrizen $\mathbb{P}_{new}$ entspricht;

(iv) iteratives Berechnen eines neuen Stabilitätsparameters

$$\mathcal{S}_{new}^{steady}$$

basierend auf Schritt (ii), bis ein Stoppkriterium erfüllt ist, wobei das Stoppkriterium ein Verhältnis des Stabilitätsparameters $\mathcal{S}_{steady}$ und des neuen Stabilitätsparameters

$$\mathcal{S}_{new}^{steady}$$

ist, das kleiner oder gleich $\varepsilon$ ist, wobei $\varepsilon$ einen Abweichungskoeffizienten darstellt, der zu 1 tendiert;

(v) Auswählen einer neuen Stabilitätsmatrix $\mathbb{P}_{new}^{steady}$, die dem neuen Stabilitätsparameter

$$\mathcal{S}_{new}^{steady}$$

entspricht, der das Stoppkriterium erfüllt; und

(vi) Bestimmen eines Paars $\mathcal{K}_{opt}$ von optimalem kernel-koeffizient $\gamma_{opt}$ und optimalem Abstoßungsraten-Hyperparameter $v_{opt}$, das einem maximalen Leistungselement der ausgewählten neuen Stabilitätsmatrix $\mathbb{P}_{new}^{steady}$ entspricht, unter Verwendung eines Divide-Conquer-Algorithmus;

Erhalten einer optimalen nichtlinearen Entscheidungsgrenze für das OC-SVM basierend auf den gemeinsam optimierten Hyperparametern ($\gamma_{opt}$ und $v_{opt}$) zum Maximieren der Leistung der binären Klassifizierung, wobei die gemeinsam optimierten Hyperparameter es dem OC-SVM ermöglichen, eine glatte nichtlineare Entscheidungsgrenze zu bilden, die nicht durch Ausreißer gestört ist; und
Identifizieren von kardiovaskulären Anomalien in Elektrokardiogramm- und Phonokardiogrammsignalen.

3. Computerprogrammprodukt zum Identifizieren von kardiovaskulären Anomalien in Elektrokardiogramm (EKG) und Phonokardiogramm (PCG) durch Umfassen eines nichtflüchtigen computerlesbaren Mediums mit einem darin enthaltenen computerlesbaren Programm, wobei das computerlesbare Programm, wenn es auf einer Rechenvorrichtung ausgeführt wird, die Rechenvorrichtung zu Folgendem veranlasst:
Konstruieren einer verallgemeinerten Einklassen-Support-Vektor-Maschine (OC-SVM) durch gemeinsames Optimieren von Hyperparametern (i) kernel-koeffizient $\gamma$ und (ii) Abstoßungsraten-Hyperparameter v, die einer maximalen Leistung $\mathbb{P}_{max}$ der OC-SVM entsprechen, wobei $\mathbb{P}_{max}$ aus einer Matrix $\mathbb{P}$ identifiziert wird, die aus allen möglichen Kombinationswerten von Hyperparametern $\gamma$ und v besteht, und wobei jedes Element der Leistung von OC-SVM entspricht, wobei der Schritt des gemeinsamen Optimierens der Hyperparameter umfasst:

(i) Eliminieren von Ausreißern in der Matrix P, um eine Stabilitätsmatrix $\mathbb{P}_{steady}$ unter Verwendung eines dichtebasierten Algorithmus zum Entdecken von Clustern in großen räumlichen Datenbanken mit Rauschen (DBSCAN) zu erhalten;

(ii) Berechnen eines Stabilitätsparameters $\mathcal{S}_{steady}$ durch Teilen einer maximalen Leistung der Stabilitätsmatrix $\mathbb{P}_{steady}$ mit einer Standardabweichung, die der Stabilitätsmatrix $\mathbb{P}_{steady}$ zugeordnet ist,

(iii) Diversifizieren des Stabilitätsparameters $s_{steady}$ durch Bilden einer Mehrzahl von Matrizen $\mathbb{P}_{new}$, die eine Mehrzahl von Regionen darstellen, die die Stabilitätsmatrix $\mathbb{P}_{steady}$ zum Analysieren eines neuen Stabili-

tätsparameters

$$s_{new}^{steady}$$

umfassen, der jeder der Mehrzahl von Matrizen $\mathbb{P}_{new}$ entspricht;
(iv) iteratives Berechnen eines neuen Stabilitätsparameters

$$s_{new}^{steady}$$

basierend auf Schritt (ii), bis ein Stoppkriterium erfüllt ist, wobei das Stoppkriterium ein Verhältnis des Stabilitätsparameters $s_{steady}$ und des neuen Stabilitätsparameters

$$s_{new}^{steady}$$

ist, das kleiner oder gleich $\varepsilon$ ist, wobei $\varepsilon$ einen Abweichungskoeffizienten darstellt, der zu 1 tendiert;
(v) Auswählen einer neuen Stabilitätsmatrix $\mathbb{P}_{new}^{steady}$, die dem neuen Stabilitätsparameter

$$s_{new}^{steady}$$

entspricht, der das Stoppkriterium erfüllt; und

(vi) Bestimmen eines Paars $k_{opt}$ von optimalem kernel-koeffizient $\gamma_{opt}$ und optimalem Abstoßungsraten-Hyperparameter $v_{opt}$, das einem maximalen Leistungselement der ausgewählten neuen Stabilitätsmatrix

$\mathbb{P}_{new}^{steady}$ entspricht, unter Verwendung eines Divide-Conquer-Algorithmus;
und
Erhalten einer optimalen nichtlinearen Entscheidungsgrenze für das OC-SVM basierend auf den gemeinsam optimierten Hyperparametern ($\gamma_{opt}$ und $v_{opt}$) zum Maximieren der Leistung der binären Klassifizierung, wobei die gemeinsam optimierten Hyperparameter es dem OC-SVM ermöglichen, eine glatte nichtlineare Entscheidungsgrenze zu bilden, die nicht durch Ausreißer gestört ist; und
Identifizieren von kardiovaskulären Anomalien in Elektrokardiogramm- und Phonokardiogrammsignalen.

**Revendications**

1. Procédé (200) mis en oeuvre par processeur, permettant d'identifier une anomalie cardiovasculaire dans un électrocardiogramme (ECG) et un phonocardiogramme (PCG), en construisant une machine à vecteur de support généralisée de classe unique avec des hyperparamètres optimisés conjointement de celle-ci, le procédé (200) comprenant les étapes ci-dessous consistant à :

construire une machine à vecteur de support généralisée de classe unique (OC-SVM) en optimisant conjointement (i) un hyperparamètre $\gamma$ de coefficient de noyau et (ii) un hyperparamètre $v$ de taux de rejet, correspondant à une performance maximale, $\mathbb{P}_{max}$, de la machine OC-SVM, dans laquelle la performance maximale $\mathbb{P}_{max}$ est identifiée à partir d'une matrice IP qui consiste en toutes les valeurs combinatoires possibles des hyperparamètres $\gamma$ et $v$ (202) et où chaque élément correspond à la performance de la machine OC-SVM, dans laquelle l'étape d'optimisation conjointe des hyperparamètres comprend les étapes ci-dessous consistant à :

(i) éliminer des valeurs aberrantes dans la matrice IP en vue d'obtenir une matrice de stabilité $\mathbb{P}_{steady}$ (202a) en faisant appel à un algorithme fondé sur la densité pour la découverte de groupes dans de grandes bases de données spatiales avec bruit (DBSCAN) ;

(ii) calculer un paramètre de stabilité $\mathcal{S}_{steady}$ en divisant une performance maximale de la matrice de stabilité $\mathbb{P}_{steady}$ par un écart type associé à la matrice de stabilité $\mathbb{P}_{steady}$ (202b) ;

(iii) diversifier le paramètre de stabilité $\mathcal{S}_{steady}$ en formant une pluralité de matrices $\mathbb{P}_{new}$ représentant une pluralité de régions comprenant la matrice de stabilité $\mathbb{P}_{steady}$, en vue d'analyser un nouveau paramètre de stabilité

$$\mathcal{S}_{new}^{steady}$$

correspondant à chacune de la pluralité de matrices $\mathbb{P}_{new}$ (202c) ;

(iv) calculer de manière itérative le nouveau paramètre de stabilité

$$\mathcal{S}_{new}^{steady},$$

sur la base de l'étape (ii), jusqu'à ce qu'un critère d'arrêt soit satisfait, dans lequel le critère d'arrêt est un rapport entre le paramètre de stabilité $\mathcal{S}_{steady}$ et le nouveau paramètre de stabilité

$$\mathcal{S}_{new}^{steady}$$

inférieur ou égal à $\varepsilon$, dans lequel $\varepsilon$ représente un coefficient d'écart tendant vers 1 (202d) ;

(v) sélectionner une nouvelle matrice de stabilité $\mathbb{P}_{new}^{steady}$ correspondant au nouveau paramètre de stabilité

$$\mathcal{S}_{new}^{steady}$$

qui satisfait le critère d'arrêt (202e) ; et

(vi) déterminer une paire $\mathcal{k}_{opt}$ d'hyperparamètre de coefficient de noyau optimal $\gamma_{opt}$ et d'hyperparamètre de taux de rejet optimal $v_{opt}$ correspondant à un élément de performance maximale de la nouvelle matrice de stabilité sélectionnée $\mathbb{P}_{new}^{steady}$ (202f), en faisant appel à un algorithme de type « diviser pour régner » ;

obtenir une limite de décision non linéaire optimale pour la machine OC-SVM sur la base des hyperparamètres optimisés conjointement ($\gamma_{opt}$ et $v_{opt}$), en vue de maximiser une performance de classification binaire (204), dans lesquels les hyperparamètres optimisés conjointement permettent à un modèle d'apprentissage de la machine OC-SVM de former une limite de décision non linéaire lisse non perturbée par des valeurs aberrantes ; et identifier une anomalie cardio-vasculaire dans des signaux d'électrocardiogramme et de phonocardiogramme.

2. Système (100) permettant d'identifier une anomalie cardiovasculaire dans un électrocardiogramme (ECG) et un phonocardiogramme (PCG), en construisant une machine à vecteur de support généralisée de classe unique avec des hyperparamètres optimisés conjointement de celle-ci, le système (100) comprenant :
un ou plusieurs dispositifs de stockage de données (102) couplés fonctionnellement à un ou plusieurs processeurs matériels (104) et configurés de manière à stocker des instructions configurées à des fins d'exécution par ledit un ou lesdits plusieurs processeurs matériels de manière à mettre en oeuvre les étapes ci-dessous consistant à :

construire une machine à vecteur de support généralisée de classe unique (OC-SVM) en optimisant conjointement (i) un hyperparamètre $\gamma$ de coefficient de noyau et (ii) un hyperparamètre v de taux de rejet, correspondant à une performance maximale, $\mathbb{P}_{max}$, de la machine OC-SVM, dans laquelle la performance maximale $\mathbb{P}_{max}$ est identifiée à partir d'une matrice $\mathbb{P}$ qui consiste en toutes les valeurs combinatoires possibles des hyper-paramètres $\gamma$ et v et où chaque élément correspond à la performance de la machine OC-SVM, dans lesquels ledit un ou lesdits plusieurs processeurs matériels sont en outre configurés de manière à optimiser conjointement les hyperparamètres en mettant en oeuvre les étapes ci-dessous consistant à :

(i) éliminer des valeurs aberrantes dans la matrice $\mathbb{P}$ en vue d'obtenir une matrice de stabilité $\mathbb{P}_{steady}$, en faisant appel à un algorithme fondé sur la densité pour la découverte de groupes dans de grandes bases de données spatiales avec bruit (DBSCAN) ;

(ii) calculer un paramètre de stabilité $s_{steady}$ en divisant une performance maximale de la matrice de stabilité $\mathbb{P}_{steady}$ par un écart type associé à la matrice de stabilité $\mathbb{P}_{steady}$ ;

(iii) diversifier le paramètre de stabilité $s_{steady}$ en formant une pluralité de matrices $\mathbb{P}_{new}$ représentant une pluralité de régions comprenant la matrice de stabilité $\mathbb{P}_{steady}$, en vue d'analyser un nouveau para-mètre de stabilité

$$s_{new}^{steady}$$

correspondant à chacune de la pluralité de matrices $\mathbb{P}_{new}$ ;
(iv) calculer de manière itérative le nouveau paramètre de stabilité

$$s_{new}^{steady},$$

sur la base de l'étape (ii), jusqu'à ce qu'un critère d'arrêt soit satisfait, dans lequel le critère d'arrêt est un rapport entre le paramètre de stabilité $s_{steady}$ et le nouveau paramètre de stabilité

$$s_{new}^{steady}$$

inférieur ou égal à $\varepsilon$, dans lequel $\varepsilon$ représente un coefficient d'écart tendant vers 1 ;
(v) sélectionner une nouvelle matrice de stabilité $\mathbb{P}_{new}^{steady}$ correspondant au nouveau paramètre de stabilité

$$s_{new}^{steady}$$

qui satisfait le critère d'arrêt ; et

(vi) déterminer une paire $k_{opt}$ d'hyperparamètre de coefficient de noyau optimal $\gamma_{opt}$ et d'hyperparamètre de taux de rejet optimal $v_{opt}$ correspondant à un élément de performance maximale de la nouvelle matrice de stabilité sélectionnée $\mathbb{P}_{new}^{steady}$, en faisant appel à un algorithme de type « diviser pour régner » ;

obtenir une limite de décision non linéaire optimale pour la machine OC-SVM sur la base des hyperparamètres optimisés conjointement ($\gamma_{opt}$ et $v_{opt}$), en vue de maximiser une performance de classification binaire, dans lesquels les hyperparamètres optimisés conjointement permettent à la machine OC-SVM de former une limite de décision non linéaire lisse non perturbée par des valeurs aberrantes ; et
identifier une anomalie cardio-vasculaire dans des signaux d'électrocardiogramme et de phonocardiogramme.

**3.** Produit-programme informatique permettant d'identifier une anomalie cardio-vasculaire dans un électrocardiogramme (ECG) et un phonocardiogramme (PCG) en construisant une machine à vecteur de support généralisée de classe unique avec des hyperparamètres optimisés conjointement de celle-ci, comprenant un support non transitoire lisible par ordinateur dans lequel est incorporé un programme lisible par ordinateur, dans lequel le programme lisible par ordinateur, lorsqu'il est exécuté sur un dispositif informatique, amène le dispositif informatique à mettre en oeuvre les étapes ci-dessous consistant à :

construire une machine à vecteur de support généralisée de classe unique (OC-SVM) en optimisant conjointement (i) un hyperparamètre $\gamma$ de coefficient de noyau et (ii) un hyperparamètre v de taux de rejet, correspondant à une performance maximale, $\mathbb{P}_{max}$, de la machine OC-SVM, dans laquelle la performance maximale $\mathbb{P}_{max}$ est identifiée à partir d'une matrice $\mathbb{P}$ qui consiste en toutes les valeurs combinatoires possibles des hyperparamètres $\gamma$ et v et où chaque élément correspond à la performance de la machine OC-SVM, dans laquelle l'étape d'optimisation conjointe des hyperparamètres comprend les étapes ci-dessous consistant à :

(i) éliminer des valeurs aberrantes dans la matrice $\mathbb{P}$ en vue d'obtenir une matrice de stabilité $\mathbb{P}_{steady}$, en faisant appel à un algorithme fondé sur la densité pour la découverte de groupes dans de grandes bases de données spatiales avec bruit (DBSCAN) ;

(ii) calculer un paramètre de stabilité $\mathcal{S}_{steady}$ en divisant une performance maximale de la matrice de stabilité $\mathbb{P}_{steady}$ par un écart type associé à la matrice de stabilité $\mathbb{P}_{steady}$ ;

(iii) diversifier le paramètre de stabilité $\mathcal{S}_{steady}$ en formant une pluralité de matrices $\mathbb{P}_{new}$ représentant une pluralité de régions comprenant la matrice de stabilité $\mathbb{P}_{steady}$, en vue d'analyser un nouveau paramètre de stabilité

$$\mathcal{S}_{new}^{steady}$$

correspondant à chacune de la pluralité de matrices $\mathbb{P}_{new}$ ;
(iv) calculer de manière itérative le nouveau paramètre de stabilité

$$\mathcal{S}_{new}^{steady},$$

sur la base de l'étape (ii), jusqu'à ce qu'un critère d'arrêt soit satisfait, dans lequel le critère d'arrêt est un rapport entre le paramètre de stabilité $\mathcal{S}_{steady}$ et le nouveau paramètre de stabilité

$$\mathcal{S}_{new}^{steady}$$

inférieur ou égal à $\varepsilon$, dans lequel $\varepsilon$ représente un coefficient d'écart tendant vers 1 ;
(v) sélectionner une nouvelle matrice de stabilité $\mathbb{P}_{new}^{steady}$ correspondant au nouveau paramètre de stabilité

$$\mathcal{S}_{new}^{steady}$$

qui satisfait le critère d'arrêt ; et

(vi) déterminer une paire $\mathcal{k}_{opt}$ d'hyperparamètre de coefficient de noyau optimal $\gamma_{opt}$ et d'hyperparamètre

de taux de rejet optimal $v_{opt}$ correspondant à un élément de performance maximale de la nouvelle matrice de stabilité sélectionnée $\mathbb{P}_{new}^{steady}$, en faisant appel à un algorithme de type « diviser pour régner » ;

obtenir une limite de décision non linéaire optimale pour la machine OC-SVM sur la base des hyperparamètres optimisés conjointement ($\gamma_{opt}$ et $v_{opt}$), en vue de maximiser une performance de classification binaire, dans lesquels les hyperparamètres optimisés conjointement permettent à la machine OC-SVM de former une limite de décision non linéaire lisse non perturbée par des valeurs aberrantes ; et
identifier une anomalie cardio-vasculaire dans des signaux d'électrocardiogramme et de phonocardiogramme.

SYSTEM 100

MEMORY 102

HARDWARE PROCESSOR(S) 104

I/O INTERFACE(S) 106

FIG.1

FIG.2

jointly optimizing hyperparameters (i) kernel co-efficient $\gamma$ and (ii) rejection rate hyperparameter $v$ , corresponding to a maximum performance $P_{max}$ of a one-class support vector machine (OC-SVM), wherein $P_{max}$ is identified from a matrix P of combinational values of the hyperparameters

202

obtaining an optimal non-linear decision boundary based on the jointly optimized hyperparameters ($\gamma_{opt}$ and $v_{opt}$) for binary classification

204

200

FIG.3

FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 201721028487

**Non-patent literature cited in the description**

- **ZHUANG L et al.** Parameter optimization of kernel-based: one-class classifier on imbalance learning. *JOURNAL OF COMPUTERS,* October 2006, vol. 1 (7